# EUROPÄISCHE PATENTSCHRIFT

(11) **EP 1 829 804 B1**
(45) Veröffentlichungstag und Bekanntmachung des Hinweises auf die Patenterteilung: **26.05.2010**
(21) Anmeldenummer: 07405058.4
(22) Anmeldetag: 27.02.2007
(51) Int. Cl.: B65G 65/23, B07C 1/02

(54) **Vorrichtung zum Entladen von oben offenen, insbesondere kastenförmigen, Behältern**
Device for unloading containers which are open at the top, in particular box-shaped containers
Dispositif destiné à la décharge de récipients à ouverture par le dessus, en particulier en forme de caisse

(30) Priorität: 01.03.2006 CH 3272006
(43) Veröffentlichungstag der Anmeldung: 05.09.2007
(73) Patentinhaber: Gilgen Logistics AG, 3173 Oberwangen bei Bern (CH); Solystic S.A.S., 94257 Gentilly Cedex (FR)
(72) Erfinder: Wyss, Mark, 3174 Thörishaus (CH); Moullard, Eric, 26750 Saint Paul-les-Romans (FR)
(74) Vertreter: Ottow, Jens M.

(56) Entgegenhaltungen:
- EP-A- 0 145 385
- EP-A- 1 902 984
- DE-A1- 2 527 778
- DE-A1- 2 656 619
- DE-B3-102007 018 634
- FR-A- 2 470 745
- GB-A- 529 656
- GB-A- 1 168 748
- GB-A- 1 196 918
- US-A1- 2007 065 265

## Beschreibung

### TECHNISCHES GEBIET

Die vorliegende Erfindung bezieht sich auf das Gebiet der Transport- und Verarbeitungstechnik für in Behältern beförderte Gegenstände. Sie betrifft eine Vorrichtung zum Entladen von oben offenen, insbesondere kastenförmigen, Behältern gemäss dem Oberbegriff des Anspruchs 1.

### STAND DER TECHNIK

Im Stand der Technik ist eine Vielzahl von Transport- und Verarbeitungssystemen bekannt, bei denen einzelne Gegenstände gesammelt, sortiert, verteilt und zusammengefasst und zwischen verschiedenen Stufen der Verarbeitung in oben offenen, kastenartigen Behältern transportiert werden. Ein typisches Beispiel für die Behälter-orientierte Verarbeitung von kleineren Gegenständen ist die Sortierung und Verteilung von Postsendungen in den grossen Postverteilzentren.

Wenn die mit den Postsendungen gefüllten Behälter auf Rollenbahnen oder dgl. von einer zur nächsten Stufe der Bearbeitung transportiert worden sind, müssen sie dort entladen werden, damit der Inhalt einzeln weiterverarbeitet werden kann. Hierzu werden automatische arbeitende Entladevorrichtungen eingesetzt, in denen die Behälter auf unterschiedliche Weise durch Drehen oder Kippen um eine Achse entladen werden.

Beispiele für derartige Entladevorrichtungen oder-systeme sind in der US-A-5,564,882, der US-A-5,772,383 oder der US-B2-6,896,471 offenbart.

Eine Vorrichtung mit den Merkmalen des Oberbegriffs des Anspruchs 1 ist aus der GB 529 656 bekannt.

Nachteilig ist bei den bekannten Entladevorrichtungen, dass sie kompliziert aufgebaut sind, sich nur schwer an unterschiedliche Behältergrössen anpassen lassen, und sich nur schwer in unterschiedliche Transportsysteme einbinden lassen.

### DARSTELLUNG DER ERFINDUNG

Es ist Aufgabe der Erfindung, eine Entladevorrichtung für Behälter zu schaffen, welche die Nachteile bekannter Entladevorrichtungen vermeidet, flexibel einsetzbar ist, zuverlässig und vollautomatisch arbeitet, einfach aufbaut ist, hohen Anforderungen an die Sicherheit und Umweltverträglichkeit genügt und sehr leicht an die unterschiedlichsten Transportsysteme anpassbar ist.

Die Aufgabe wird durch die Gesamtheit der Merkmale des Anspruchs 1 gelöst. Der Kern der Erfindung besteht darin, eine Klemm/Schwenkvorrichtung mit einem unteren Klemmelement und einem oberen Klemmelement zum klemmenden Halten des Behälters zwischen den beiden Klemmelementen einzusetzen, die gemeinsam mit dem gehaltenen Behälter um eine seitlich neben dem Behälter angeordnete erste horizontale Achse verschwenkbar sind, wobei die beiden Klemmelemente relativ zueinander zwischen einer ersten Klemmposition, in welcher ein Behälter zwischen die beiden Klemmelemente eingebracht bzw. zwischen den beiden Klemmelementen entnommen werden kann, und einer zweiten Klemmposition, in welcher der eingebrachte Behälter zwischen den beiden Klemmelementen klemmend gehalten wird, bewegbar sind. Das obere Klemmelement ist zwischen der ersten Klemmposition und der zweiten Klemmposition relativ zum unteren Klemmelement um eine zweite horizontale Achse schwenkbar, welche parallel zur ersten horizontalen Achse und auf derselben Seite des Behälters wie die erste horizontale Achse angeordnet ist. Die beiden Klemmelemente bilden so zum Ein- und Ausbringen des Behälters eine Art offene Zange, die nach dem Schliessen zusammen mit dem Behälter in die Entladeposition gekippt werden kann. Die aus den Klemmelementen gebildete Zange ist von drei Seiten zugänglich, so dass sie sehr flexibel in ein Transportsystem zum Transport der vollen bzw. leeren Behälter eingebunden werden kann. Die Drehung des eingeklemmten Behälters um eine (feststehende) horizontale Achse erfordert ein Minimum an Platz, und kann sehr schnell und geräuscharm durchgeführt werden. Zur Erzeugung einer Klemmkraft ist das obere Klemmelement um die zweite horizontale Achse in Richtung auf die zweite Klemmposition federnd vorgespannt ist. Dabei können vorteilhafterweise zur Erzeugung der Vorspannung in der zweiten horizontalen Achse Torsionsfederelemente vorgesehen sind. Hierdurch ergibt sich für den Klemmmechanismus ein besonders kompakter Aufbau.

Besonders günstig ist es im Hinblick auf die Einfachheit des Aufbaus, wenn dabei gemäss einer Weiterbildung der Erfindung die erste und zweite horizontale Achse in einer Achse zusammenfallen.

Die Betätigung der Klemmvorrichtung lässt sich erheblich vereinfachen, wenn gemäss einer anderen Ausgestaltung der Erfindung die Klemm/Schwenkvorrichtung um die erste horizontale Schwenkachse zwischen einer ersten Schwenkposition, in welcher ein Behälter zwischen die beiden Klemmelemente eingebracht bzw. zwischen den beiden Klemmelementen entnommen werden kann, und einer zweiten Schwenkposition, in welcher ein Inhalt des Behälters aus dem Behälter herausfällt, hin- und herschwenkbar ist, wenn sich die Klemmelemente in der ersten Schwenkposition der Klemm/Schwenkvorrichtung in der ersten Klemmposition befinden, wenn sich die Klemmelemente in der zweiten Schwenkposition der Klemm/Schwenkvorrichtung in der zweiten Klemmposition befinden, und wenn Mittel vorgesehen sind, durch welche die Klemmelemente von der zweiten Klemmposition in die erste Klemmposition gebracht werden, sobald die Klemm/Schwenkvorrichtung von der zweiten Schwenkposition in die erste Schwenkposition verschwenkt wird, und umgekehrt. Insbesondere umfassen die Mittel einen Anschlag, an welchem das obere Klemmelement beim Verschwenken der Klemm/Schwenkvorrichtung von der zweiten Schwenkposition in die erste Schwenkposition vor dem Erreichen der zweiten Schwenkposition mit seinem freien Ende anschlägt.

Eine weitere Ausgestaltung der Erfindung ist dadurch gekennzeichnet, dass das untere Klemmelement eine Bodenstütze umfasst, welche am freien Schenkel eines L-förmigen, unter den Behälter greifenden Schwenkarms befestigt und mit diesem um die erste horizontale Achse schwenkbar ist, derart, dass die Bodenstütze in der zweiten Klemmposition am Boden des klemmend gehaltenen Behälters anliegt.

Vorzugsweise kann die Bodenstütze zur Einstellung auf unterschiedlich hohe Behälter in ihrem Abstand zum Schwenkarm mittels einer Höhenverstellung verstellbar sein.

Zur Erleichterung der Positionierung der Behälter in der Klemm/Schwenkvorrichtung können an dem unteren Klemmelement Mittel zum Zentrieren der in die Klemm/Schwenkvorrichtung eingeführten Behälter vorgesehen sein, welche Mittel ein an der Bodenstütze angebrachtes keilförmiges Zentrierelement und einen am Schwenkarm angebrachten Anschlag umfassen.

Gemäss einer anderen Ausgestaltung ist das obere Klemmelement ein Deckel, welcher in der zweiten Klemmposition am oberen Rand des in die Klemm/Schwenkvorrichtung eingeführten Behälters anliegt und eine Öffnung zum Auskippen des Behälterinhalts aufweist.

Insbesondere umfasst der Deckel einen Rahmen und eine am Rahmen befestigte Platte, in welcher als Öffnung zum Auskippen des Behälterinhalts ein an die Abmessungen des Behälters angepasster Ausschnitt vorgesehen ist.

Zusätzlich können auf der Unterseite des Deckels seitlich keilförmige Zentrierelemente zum Zentrieren der in die Klemm/Schwenkvorrichtung eingeführten Behälter vorgesehen sein.

Gemäss einer weiteren Ausgestaltung der Erfindung ist zum Verschwenken der Klemm/Schwenkvorrichtung zwischen den beiden Schwenkpositionen ein unterhalb des unteren Klemmelements angeordneter, von einem Elektromotor angetriebener, am unteren Klemmelement angreifender Hebelmechanismus vorgesehen.

Eine andere Ausgestaltung ist dadurch gekennzeichnet, dass die Vorrichtung in einem Rahmengestell untergebracht ist und eine eigenständige Einheit bildet, welche mit Mitteln zum Zuführen gefüllter Behälter und Mitteln zum Wegführen geleerter Behälter kombinierbar ist, wobei vorzugsweise innerhalb des Rahmengestells eine von drei Seiten zugängliche horizontale Ebene zur Aufnahme der zu leerenden Behälter vorgesehen ist, das untere Klemmelement in der ersten Klemmposition unterhalb der Ebene positioniert und durch die Ebene hindurch nach oben verschwenkbar ist, und das obere Klemmelement in einem durch die Behälterhöhe vorgegebenen Abstand oberhalb der Ebene angeordnet ist.

Die Ebene zur Aufnahme der zu leerenden Behälter kann insbesondere durch eine Rollenbahn gebildet werden, deren Transportrichtung parallel zur ersten horizontalen Achse ausgerichtet ist und die durch einen Elektromotor angetrieben ist.

Bevorzugt ist die erste horizontale Achse im oberen Bereich des Rahmengestells in der Nähe und parallel zu einer Seitenkante des Rahmengestells fest angeordnet, derart, dass ein zum Auskippen verschwenkter Behälter aus dem Rahmengestell nach oben herausgeschwenkt wird und der Inhalt über die Seitenkante nach unten fällt, und dass die Ebene bzw. die Rollenbahn im Rahmengestell in der Höhe veränderbar befestigt ist. Der ausserhalb des Rahmengestells befindliche Schwenkbereich der Klemm/Schwenkvorrichtung ist dabei vorzugsweise durch eine Schutzhaube abgedeckt.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen Seitenansicht eine Behälterentladeanlage mit einer Entladevorrichtung gemäss einem bevorzugten Ausführungsbeispiel der Erfindung und einer Rollenbahn zum Zuführen der gefüllten Behälter;
- Fig. 2: eine andere Ansicht der in Fig. 1 gezeigten Behälterentladeanlage;
- Fig. 3: eine separate perspektivische Darstellung der Entladevorrichtung aus Fig. 1;
- Fig. 4: das für den Aufbau der Entladevorrichtung aus Fig. 3 verwendete Rahmengestell mit montierter Rollenbahn;
- Fig. 5: die Entladevorrichtung aus Fig. 3 mit abgenommener Seitentür und abgenommenen Seitenblechen;
- Fig. 6: die Seitenansicht der Entladevorrichtung aus Fig. 3 mit aufgeschnittener Seite;
- Fig. 7: die wesentlichen Elemente des Klemm/Schwenkmechanismus der Entladevorrichtung aus Fig. 3 (ohne Behälter);
- Fig. 8: die wesentlichen Elemente des Klemm/Schwenkmechanismus der Entladevorrichtung aus Fig. 3 (mit eingeklemmtem Behälter);
- Fig. 9: in verschiedenen Teilfiguren Fig. 9(a) bis Fig. 9(c) verschiedene Stellungen beim Schwenkvorgang des Klemm/Schwenkmechanismus aus Fig. 7; und
- Fig. 10: in verschiedenen Teilfiguren Fig. 10(a) bis Fig. 10(c) die verschiedenen Stellungen aus Fig. 9 in perspektivischer Seitenansicht.

### WEGE ZUR AUSFÜHRUNG DER ERFINDUNG

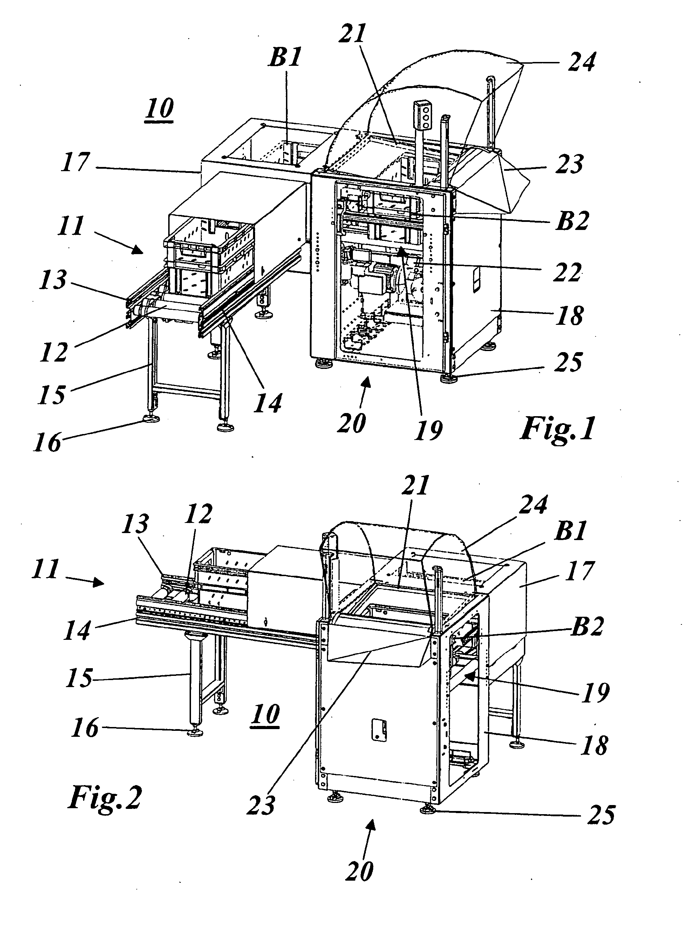

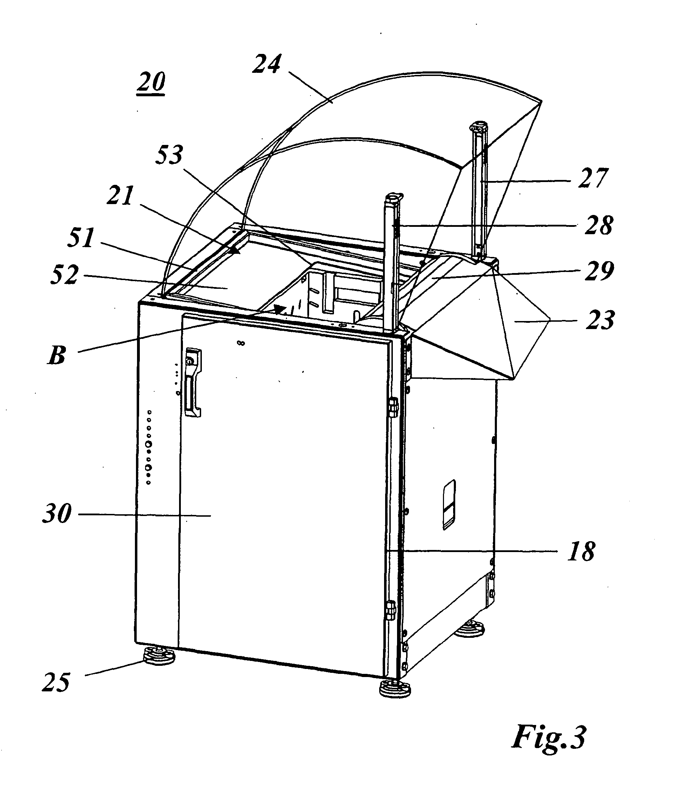

In den Fig. 1 und 2 ist aus verschiedenen Blickwinkeln eine Behälterentladeanlage 10 dargestellt, die als zustellbares Modul eine Entladevorrichtung 20 gemäss einem bevorzugten Ausführungsbeispiel der Erfindung umfasst. Die Entladevorrichtung 20, die zum Entladen bzw. Auskippen von kistenförmigen, oben offenen Behältern B1, B2 vorgesehen ist, ist in einem rechteckigen Rahmengestell 18 untergebracht, das an drei Seiten entsprechende Öffnungen für das Zuführen von gefüllten bzw. das Abführen von entleerten Behältern aufweist. Der zu entladene Behälter B1, B2, wird beim Entladevorgang nach oben aus dem Rahmengestell 18 herausgeschwenkt und der aus dem Behälter B1, B2 herausfallende Inhalt mittels eines seitlich angebrachten Leitblechs 23 nach aussen geleitet. Das Leitblech 23 geht nach innen zu in eine Abdeckung (29 in Fig. 3) in Form eines Zylindermantels über. Der Schwenkbereich oberhalb des Rahmengestells 18 ist durch eine entsprechen geformte Schutzhaube 24 abgedeckt. Die Schutzhaube 24 kann durchsichtig, z.B. aus Acrylglas, ausgebildet sein. Zu beiden Seiten der Schutzhaube sind Pfosten (27, 28 in Fig. 3) vorgesehen, die ein Sicherheitslichtgitter quer durch die Schutzhaube 24 erzeugen, das mit der Maschinensteuerung in Verbindung steht.

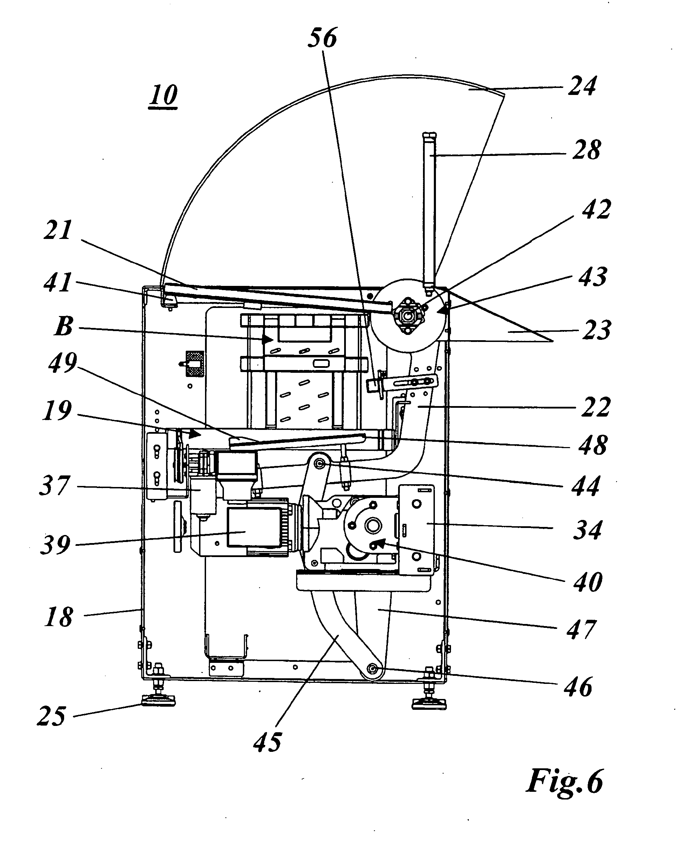

Innerhalb des Rahmengestells 18 steht der zu leerende Behälter (B2) auf einer Rollenbahn 19, deren Transportrichtung parallel zur Achse (42 in Fig. 6-8) orientiert ist, um die der Behälter B2 beim Entladen geschwenkt wird. Der Behälter B2 wird mittels eines L-förmigen Schwenkarms 22 geschwenkt, der unter den Behälter B2 greift, von oben wird der Behälter B2 durch einen Deckel 21 gehalten, der sich beim Schwenkvorgang mit Vorspannung auf den oberen Rand des Behälters B2 absenkt und den Behälter B2 klemmend hält. Der Deckel 21 besteht aus einem Rahmen 51 und einer am Rahmen 51 lösbar befestigten Platte 52, die einen Ausschnitt 53 aufweist. Der Ausschnitt 53 ist auf die Abmessungen des Behälters B2 derart abgestimmt, dass der Behälter B2 am Rand sicher gehalten wird, der Inhalt des Behälters B2 jedoch ungehindert durch den Ausschnitt 53 entladen werden kann. Bei wechselnder Behältergrösse kann die Platte 52 entsprechend ausgetauscht werden. Die Entladevorrichtung 20 bildet eine eingeständige, modulare Einheit, der durch eine der drei seitlichen Öffnungen die gefüllten Behälter B1, B2 zugeführt werden, die den ausgeleerten Inhalt über das Leitblech 23 zur Weiterverarbeitung nach aussen abgibt, und die durch eine der drei seitlichen Öffnungen den entleerten Behälter wieder nach aussen abgibt.

Für die Zuführung der gefüllten Behälter B1, B2 zur Entladevorrichtung 20 ist in der Behälterentladeanlage 10 der Fig. 1 bzw. 2 eine seitlich angeordnete Rollenbahn 11 vorgesehen, die an der dem Leitblech 23 gegenüberliegenden seitlichen Öffnung der Entladevorrichtung 20 endet. Geführt durch die Seitenwände 13, 14 der Rollenbahn 11 gelangen die gefüllten Behälter auf den Rollen 12 zu der hinteren Öffnung der Entladevorrichtung 20 und werden dort durch eine (in der Fig. 1 und 2 nicht sichtbare) Transportvorrichtung quer zur Rollenbahn 11 auf die parallele Rollenbahn 19 innerhalb der Entladevorrichtung 20 verschoben (Behälter B1 -> Behälter B2). Nach dem Entladen kann der Behälter B2 mittels der motorisch angetriebenen Rollenbahn 19 seitlich aus der Entladevorrichtung 20 heraustransportiert und (z.B. durch einen angrenzenden Lift) einer erneuten Füllung zugeführt werden. Die Rollenbahn 11 steht auf Beinen 15. Die Rollenbahn 11 und die Entladevorrichtung 20 können relativ zueinander in der Höhe mittels Stellfüssen 16, 25 verändert bzw. justiert werden. Am Ende der Rollenbahn 11 ist eine weitere Schutzhaube 17 vorgesehen, die - ebenso wie die Schutzhaube 24 - der Personensicherheit und dem Schallschutz dient. An der Ausgabeseite der Entladevorrichtung 20 kann ein seitlicher Anschlag vorgesehen werden, der ein Herausrollen der in der Entladevorrichtung 20 befindlichen Behälter B2 verhindert und beispielsweise durch einen angrenzenden Liftmechanismus zur Freigabe eines Behälters betätigt werden kann.

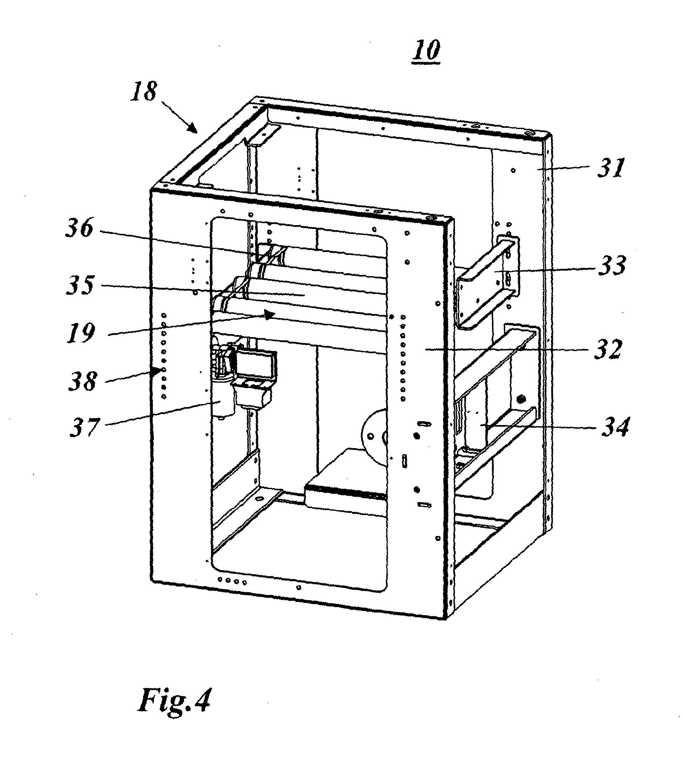

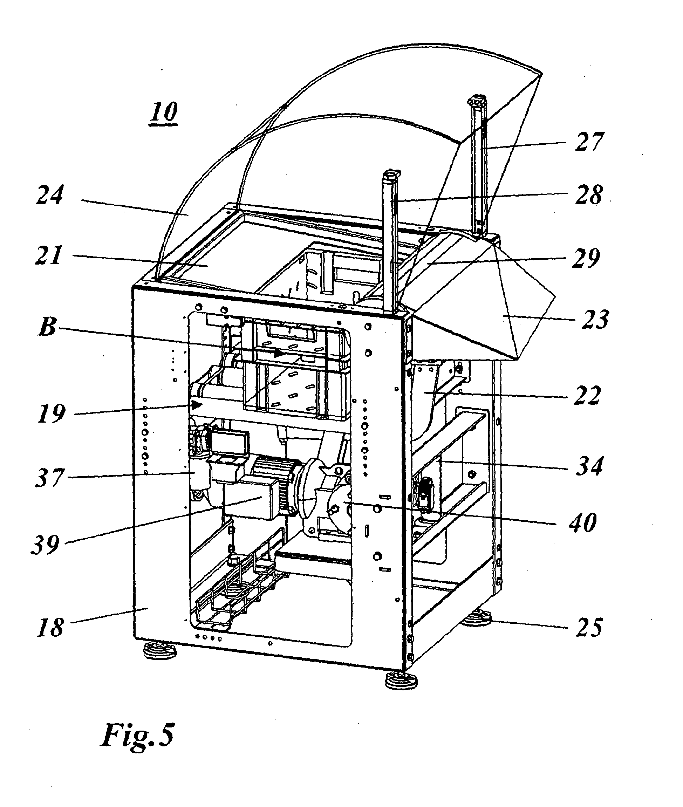

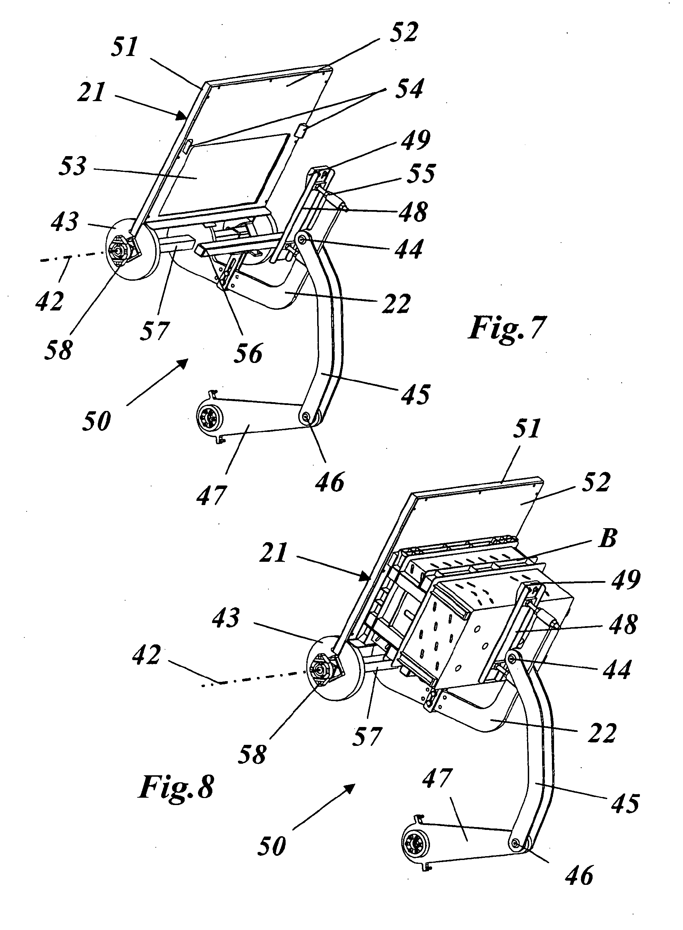

Die modulartige Entladevorrichtung 20 hat einen inneren Aufbau, der in den Fig. 3 bis 6 detaillierter wiedergegeben ist. Das Rahmengestell 18 umfasst zwei Seitenteile 31 und 32 (Fig. 4), die durch quer verlaufende Verbindungselemente miteinander verbunden sind und beispielsweise mittels einer Tür 30 den leichten Zugang zum Innenraum ermöglichen. Eines der Verbindungselemente ist eine Motorkonsole 34, die den Antrieb (Motor 39 und Getriebe 40 in Fig. 5, 6) für einen Klemm/Schwenkmechanismus (50 in Fig. 7) trägt, mittels dessen die Behälter entladen werden. Ein weiteres Verbindungselement ist ein vorderer (in Fig. 4 praktisch nicht sichtbarer) Rollenbahnhalter, in dem die Rollen 35 der Rollenbahn 19 mit dem vorderen Ende drehbar gelagert sind. Mit den hinteren Enden sind die Rollen 35 in zwei kurzen Rollenbahnhaltern 33 gelagert, die sich von den beiden Seitenteilen 31, 32 nach innen erstrecken, jedoch in der Mitte eine Lücke freilassen, durch die hindurch sich der Schwenkarm 22 frei bewegen kann. Die Rollen 35 der Rollenbahn 19 sind alternierend an den Enden paarweise durch Antriebsriemen untereinander gekoppelt. Der Antrieb erfolgt über einen steuerbaren Elektromotor 37.

Wie in Fig. 5 erkennbar ist, wird ein Behälter B zum Entladen auf die Rollenbahn 19 unter den Deckel 21 geschoben, der leicht schräg stehend mit dem freien Ende an einem Anschlag (41 in Fig. 6) anliegt. Für die Funktion der Klemm/Schwenkvorrichtung 50 ist es wichtig, dass der vertikale Abstand zwischen der Rollenbahn 19 und dem Deckel 21 auf die Höhe des zu entladenden Behälters B abgestimmt ist. Damit Behälter B unterschiedlicher Höhe in der Entladevorrichtung 20 entladen werden können, kann die Höhe der Rollenbahn 19 in der Entladevorrichtung 20 durch vertikales Versetzen der Rollenbahnhalter 33 verändert werden. Dazu sind in den Seitenteilen 31, 32 vertikale Reihen von gleichmässig beabstandeten Befestigungslöchern 38 vorgesehen.

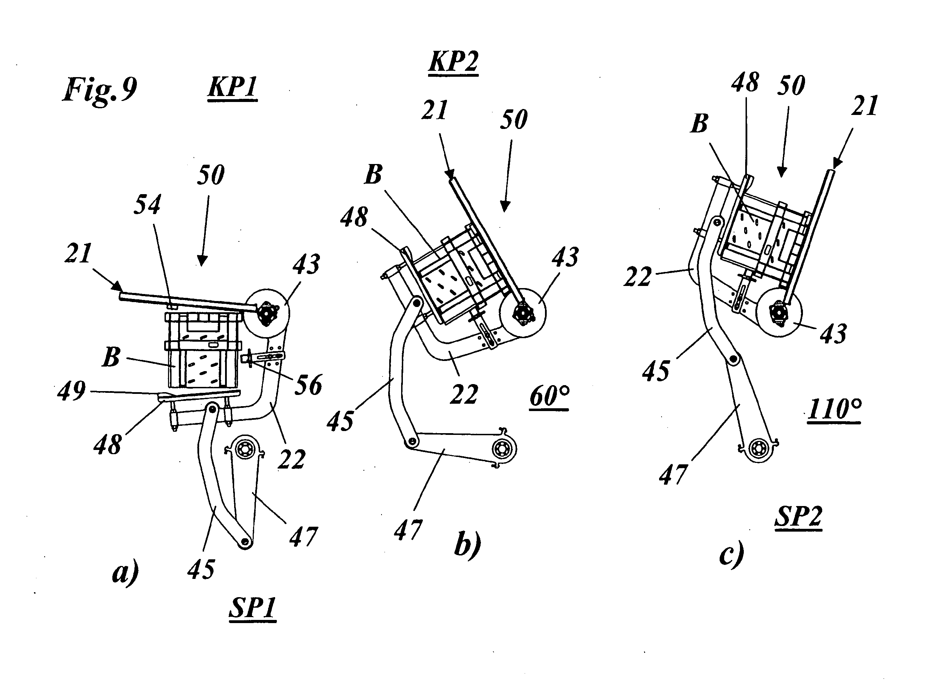

Zum Anheben des in der Entladevorrichtung 20 auf der Rollenbahn 19 stehenden Behälters B wird die in Fig. 7 bis 10 separat dargestellte, kombinierte Klemm/Schwenkvorrichtung 50 eingesetzt. Die Klemm/Schwenkvorrichtung 50 hat als unteres Klemmelement eine am freien Schenkel des L-förmigen Schwenkarms 22 befestigte Bodenstütze 48, die sich in der in Fig. 6 gezeigten Position leicht nach unten geneigt unterhalb der Unterstützungsebene der Rollenbahn 19 befindet. Wird der Schwenkarm 22 um die Achse 42 im Uhrzeigersinn geschwenkt, dreht sich die Bodenstütze 48 in eine zum Boden des Behälters B parallele Position und liegt dann am Boden des Behälters B an. Ein auf der Oberseite der Bodenstütze 48 angeordnetes Zentrierelement 49 befördert dabei mit seiner keilförmig angeschrägten Innenseite den lose auf der Rollenbahn 19 aufliegenden Behälter B in Richtung auf einen am anderen Schenkel des Schwenkarms 22 verstellbar befestigten balkenförmigen Anschlag 56. Wird der Schwenkarm 22 weiter im Uhrzeigersinn verschwenkt, hebt er mit der Bodenstütze 48 den Behälter B an und drückt in mit dem oberen Rand gegen den oberhalb des Behälters B auf dem Anschlag 41 aufsitzenden Deckel 21. Der Deckel 21 ist in der Schwenkrichtung entgegen dem Uhrzeigersinn federnd vorgespannt, so dass der Behälter B - wenn er von unten gegen den Deckel 21 drückt und ihn vom Anschlag 41 abhebt, zwischen Deckel 21 und Bodenstütze 48 eingeklemmt und klemmend gehalten wird. Dieser Vorgang ist in Fig. 9 als Übergang von der ersten Klemmposition KP1 (Fig. 9(a)), in welcher der Behälter B noch frei ist, in die zweite Klemmposition KP2 (Fig. 9(b)) dargestellt.

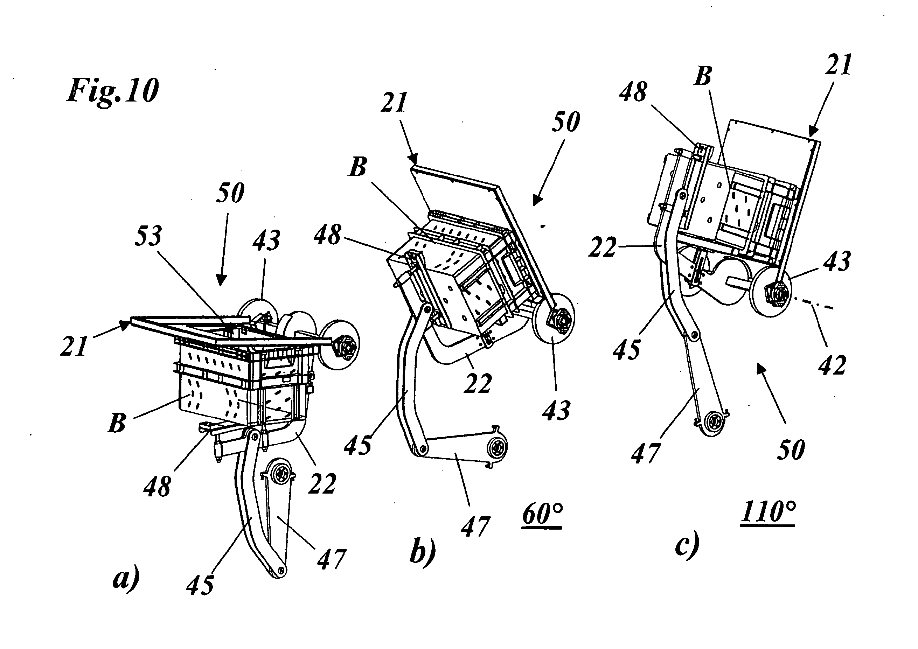

Beim weiteren Verschwenken der Klemm/Schwenkvorrichtung 50 wird - wie in Fig. 9 und 10 gezeigt - der klemmend gehaltene Behälter B um mehr als 90° (etwa 110°) von der ersten Schwenkposition SP1 über die Seite in die zweite Schwenkposition SP2 gekippt, in welcher der Behälterinhalt leicht entladen werden kann. Der Deckel 21 liegt dabei in etwa parallel zur Bodenstütze 48. Die Bodenstütze 48 kann relativ zum Schwenkarm 22 mittels einer Höhenverstellung 55 (z.B. mit einer Gewindestange) in der Höhe verstellt werden, um (bei gleichzeitiger Versetzung der Rollenbahn 19) die Klemm/Schwenkvorrichtung 50 auf Behälter B mit anderen Höhen einzustellen.

Der Schwenkarm 22 ist um die Achse 42 drehbar im Rahmengestell 18 angeordnet. Er sitzt dazu drehfest auf einer Vierkant-Welle 57 (Fig. 7), die an beiden Enden mittels Drehlagern 58 an den Seitenteilen 31, 32 drehbar befestigt ist. Der Schwenkarm 22 wird durch einen darunter befindlichen Hebelmechanismus betätigt. Der Hebelmechanismus umfasst einen weiteren Schwenkarm 47, der über ein Getriebe 40 von einem steuerbaren Elektromotor 39 um eine zur Achse 42 parallele Schwenkachse verschwenkt werden kann. Die beiden Schwenkarme 22 und 47 sind über eine Verbindungsstange 45 mittels Gelenken 44, 46 in der dargestellten Weise verbunden. In der ersten Schwenkposition SP1 ist das Gelenk nahezu vollständig eingeknickt, in der zweiten Schwenkposition SP2 dagegen vollständig gestreckt (Fig. 9, 10).

Der Deckel 21 ist ebenfalls um die Achse 42 verschwenkbar. Die Vorspannung für den Deckel 21 wird durch auf der Welle 57 sitzende Torsionsfederelemente 43 erzeugt, an denen der Rahmen 51 des Deckels 21 befestigt ist. Als Torsionsfederelemente 43 kommen beispielsweise und auch bevorzugt Gummifederelemente zum Einsatz die unter der Bezeichnung ROSTA-Elemente von der schweizerischen Firma ROSTA AG angeboten werden. Derartige Gummifederelemente sind gefügte Federn mit vier vorgespannten Spezialgummikörpern zwischen einem (Vierkant-)Aussengehäuse und einem um 45° versetzten Innenvierkantprofil. Sie sind zugleich Torsionsfeder, Drehlager und Schwingungsdämpfer. Da sie keine metallischen Berührungs- oder Reibungsstellen haben, arbeiten sie absolut geräuschlos und wartungsfrei. Ihr Arbeitswinkel beträgt maximal etwa 30° (Verdrehung der beiden Vierkantelemente gegeneinander aus der 45°-Position).

Die Torsionsfederelemente 43 sind so ausgelegt und eingebaut, dass sie, wenn sich zwischen dem Deckel 21 und der Bodenstütze 48 ein Behälter B in der zweiten Klemmposition KP2 befindet (Fig. 9(b); Deckel 21 und Bodenstütze 48 stehen dann in etwa parallel zueinander), eine Klemmkraft von beispielsweise 100 N auf den Behälter B ausüben. Wird die Klemm/Schwenkvorrichtung 50 mit einem Behälter B von der zweiten Schwenkposition SP2 in die erste Schwenkposition SP1 zurückgeschwenkt (Fig. 9), setzt der Deckel 21 kurz vor Erreichen der ersten Schwenkposition SP1 mit dem freien Ende auf dem Anschlag 41 auf (Fig. 6), gibt dann den Behälter B frei und wird gleichzeitig durch die Torsionsfeder weiter vorgespannt (die auf den Anschlag 41 ausgeübte Kraft beträgt in der ersten Schwenkposition SP1 dann beispielsweise 200 N).

Der Betrieb der Behälterentladeanlage 10 läuft wie folgt ab:
Ein (mit Briefen oder dgl.) voller Behälter B wird auf der Rollenbahn 11 der Entladevorrichtung 20 zugeführt und in diese quer hineingeschoben, bis er auf der zweiten Rollenbahn 19 steht.

Die Entladevorrichtung 20 startet und dreht von der 0°-Position (Schwenkposition SP1 in Fig. 9a, 10a) in die 60°-Position (Fig. 9b, 10b).

Während dem Kippen von 0°-60° ist das durch die Pfosten 27, 28 aufgespannte Sicherheitslichtgitter aktiv (d.h., die Maschine stoppt zur Sicherheit, sobald jemand in die Öffnung der Schutzhaube 24 greift).

In der 60°-Stellung hält der Operator seine Hand auf das Briefgut in dem Behälter B und betätigt einen Fussschalter zum Kippen der Kiste bis zur 110°-Position (Schwenkposition SP2, Fig. 9c, 10c).

Bei 110° stoppt die Maschine erneut und das Briefgut gleitet über die Rutsche (Leitblech 23), geführt durch den Operator, bis zur nachfolgenden automatischen Briefsortiermaschine.

Insgesamt ergibt sich mit der Erfindung eine Entladevorrichtung für oben offene Behälter, die sich durch die folgenden Eigenschaften und Vorteile auszeichnet:
- Sie umfasst ein Klemmsystem für die Behälter (der Deckel ist vorgespannt durch "ROSTA"-Elemente);
- sie ist geeignet für variable Behältergrössen von 400x300x180 bis max. 500x350x310 (LxBxH in mm);
- es erfolgt eine automatische Zentrierung/Ausrichtung der Behälter in Kippposition;
- sie weist eine wartungsarme Konstruktion auf;
- der Lärmpegel ist kleiner 65 dB (A), es gibt keine Metall-gegen-Metall-Kontakte;
- es ist eine Zu- und Wegführung der Behälter von drei Seiten (seitlich links/rechts und von hinten) möglich;
- es wird eine maximale Sicherheit für den Bediener erreicht.

### BEZUGSZEICHENLISTE

- 10: Behälterentladeanlage
- 11,19: Rollenbahn
- 12,35: Rolle
- 13,14: Seitenwand
- 15: Bein
- 16,25: Stellfuss
- 17,24: Schutzhaube (z.B. Acrylglas)
- 18: Rahmengestell
- 20: Entladevorrichtung
- 21: Deckel (Klemm/Schwenkvorrichtung 50)
- 22: Schwenkarm (L-förmig)
- 23: Leitblech
- 27,28: Pfosten (Sicherheitslichtgitter)
- 29: Abdeckung
- 30: Tür
- 31,32: Seitenteil
- 33: Rollenbahnhalter
- 34: Motorenkonsole
- 36: Antriebsriemen
- 37: Elektromotor (Rollenbahn 19)
- 38: Befestigungsloch
- 39: Elektromotor (Schwenkarm 47)
- 40: Getriebe (Schwenkarm 47)
- 41: Anschlag (Deckel 21)
- 42: Achse (Schwenkarm 22)
- 43: Torsionsfederelement
- 44,46: Gelenk
- 45: Verbindungsstange
- 47: Schwenkarm
- 48: Bodenstütze
- 49: Zentrierelement (frontal)
- 50: Klemm/Schwenkvorrichtung
- 51: Rahmen (Deckel 21)
- 52: Platte (Deckel 21)
- 53: Ausschnitt
- 54: Zentrierelement (seitlich)
- 55: Höhenverstellung (Bodenstütze 48)
- 56: Anschlag (hinten)
- 57: Welle (vierkant)
- 58: Drehlager (Welle 57)
- B, B1, B2: Behälter
- KP1,2: Klemmposition
- SP1,2: Schwenkposition

## Patentansprüche

1. Vorrichtung (20) zum Entladen von oben offenen, insbesondere kastenförmigen, Behältern (B, B1, B2) mit einer Klemm/Schwenkvorrichtung (50), welche ein unteres Klemmelement (22, 48) und ein oberes Klemmelement (21, 51, 52) zum klemmenden Halten des Behälters (B, B1, B2) zwischen den beiden Klemmelementen (22, 48; 21, 51, 52) aufweist, die gemeinsam mit dem gehaltenen Behälter (B, B1, B2) um eine seitlich neben dem Behälter (B, B1, B2) angeordnete erste horizontale Achse (42) verschwenkbar sind, wobei die beiden Klemmelemente (22, 48; 21, 51, 52) relativ zueinander zwischen einer ersten Klemmposition (KP1), in welcher ein Behälter (B, B1, B2) zwischen die beiden Klemmelemente (22, 48; 21, 51, 52) eingebracht bzw. zwischen den beiden Klemmelementen (22, 48; 21, 51, 52) entnommen werden kann, und einer zweiten Klemmposition (KP2), in welcher der eingebrachte Behälter (B, B1, B2) zwischen den beiden Klemmelementen (22, 48; 21, 51, 52) klemmend gehalten wird, bewegbar sind, und wobei das obere Klemmelement (21, 51, 52) zwischen der ersten Klemmposition (KP1) und der zweiten Klemmposition (KP2) relativ zum unteren Klemmelement (22, 48) um eine zweite horizontale Achse schwenkbar ist, welche parallel zur ersten horizontalen Achse (42) und auf derselben Seite des Behälters (B, B1, B2) wie die erste horizontale Achse (42) angeordnet ist, ***dadurch gekennzeichnet, dass*** zur Erzeugung einer Klemmkraft das obere Klemmelement (21, 51, 52) um die zweite horizontale Achse in Richtung auf die zweite Klemmposition (KP2) federnd vorgespannt ist.

2. Vorrichtung nach Anspruch 1, **dadurch gekennzeichnet, dass** zur Erzeugung der Vorspannung in der zweiten horizontalen Achse Torsionsfederelemente (43) vorgesehen sind.

3. Vorrichtung nach einem der Ansprüche 1 oder 2, **dadurch gekennzeichnet, dass** die erste und zweite horizontale Achse in einer Achse (42) zusammenfallen.

4. Vorrichtung nach Anspruch 3, **dadurch gekennzeichnet, dass** die Klemm/Schwenkvornchtung (50) um die erste horizontale Schwenkachse (42) zwischen einer ersten Schwenkposition (SP1), in welcher ein Behälter (B, B1, B2) zwischen die beiden Klemmelemente (22, 48; 21, 51, 52) eingebracht bzw. zwischen den beiden Klemmelementen (22, 48; 21, 51, 52) entnommen werden kann, und einer zweiten Schwenkposition (SP2), in welcher ein Inhalt des Behälters (B, B1, B2) aus dem Behälter (B, B1, B2) herausfällt, hin- und herschwenkbar ist, dass sich die Klemmelemente (22, 48; 21, 51, 52) in der ersten Schwenkposition (SP1) der Klemm/Schwenkvorrichtung (50) in der ersten Klemmposition (KP1) befinden, dass sich die Klemmelemente (22, 48; 21, 51, 52) in der zweiten Schwenkposition (SP2) der Klemm/Schwenkvorrichtung (50) in der zweiten Klemmposition (KP2) befinden, und dass Mittel (41) vorgesehen sind, durch welche die Klemmelemente (22, 48; 21, 51, 52) von der zweiten Klemmposition (KP2) in die erste Klemmposition (KP1) gebracht werden, wenn die Klemm/Schwenkvorrichtung (50) von der zweiten Schwenkposition (SP2) in die erste Schwenkposition (SP1) verschwenkt wird, und umgekehrt.

5. Vorrichtung nach Anspruch 4, **dadurch gekennzeichnet, dass** die Mittel einen Anschlag (41) umfassen, an welchem das obere Klemmelement (21, 51, 52) beim Verschwenken der Klemm/Schwenkvorrichtung (50) von der zweiten Schwenkposition (SP2) in die erste Schwenkposition (SP1) vor dem Erreichen der zweiten Schwenkposition (SP2) mit seinem freien Ende anschlägt.

6. Vorrichtung nach einem der Ansprüche 1 bis 5, **dadurch gekennzeichnet, dass** das untere Klemmelement (22, 48) eine Bodenstütze (48) umfasst, welche am freien Schenkel eines L-förmigen, unter den Behälter (B, B1, B2) greifenden Schwenkarms (22) befestigt und mit diesem um die erste horizontale Achse (42) schwenkbar ist, derart, dass die Bodenstütze (48) in der zweiten Klemmposition (KP2) am Boden des klemmend gehaltenen Behälters (B, B1, B2) anliegt.

7. Vorrichtung nach Anspruch 6, **dadurch gekennzeichnet, dass** die Bodenstütze (48) zur Einstellung auf unterschiedlich hohe Behälter (B, B1, B2) in ihrem Abstand zum Schwenkarm (22) mittels einer Höhenverstellung (55) verstellbar ist.

8. Vorrichtung nach Anspruch 6 oder 7, **dadurch gekennzeichnet, dass** an dem unteren Klemmelement (22, 48) Mittel (49, 56) zum Zentrieren der in die Klemm/Schwenkvorrichtung (50) eingeführten Behälter (B, B1, B2) vorgesehen sind, welche Mittel ein an der Bodenstütze (48) angebrachtes keilförmiges Zentrierelement (49) und einen am Schwenkarm (22) angebrachten Anschlag (56) umfassen.

9. Vorrichtung nach einem der Ansprüche 1 bis 8, **dadurch gekennzeichnet, dass** das obere Klemmelement ein Deckel (21) ist, welcher in der zweiten Klemmposition (KP2) am oberen Rand des in die Klemm/Schwenkvorrichtung (50) eingeführten Behälters (B, B1, B2) anliegt und eine Öffnung (53) zum Auskippen des Behälterinhalts aufweist.

10. Vorrichtung nach Anspruch 9, **dadurch gekennzeichnet, dass** der Deckel (21) einen Rahmen (51) und eine am Rahmen (51) befestigte Platte (52) umfasst, in welcher als Öffnung zum Auskippen des Behälterinhalts ein an die Abmessungen des Behälters (B, B1, B2) angepasster Ausschnitt (53) vorgesehen ist.

11. Vorrichtung nach Anspruch 9 oder 10, **dadurch gekennzeichnet, dass** auf der Unterseite des Deckels (21) seitlich keilförmige Zentrierelemente (54) zum Zentrieren der in die Klemm/Schwenkvorrichtung (50) eingeführten Behälter (B, B1, B2) vorgesehen sind.

12. Vorrichtung nach einem der Ansprüche 1 bis 11, **dadurch gekennzeichnet, dass** zum Verschwenken der Klemm/Schwenkvornchtung (50) zwischen den beiden Schwenkpositionen (SP1, SP2) ein unterhalb des unteren Klemmelements (22, 48) angeordneter, von einem Elektromotor (39) angetriebener, am unteren Klemmelement (22, 48) angreifender Hebelmechanismus (45, 46, 47) vorgesehen ist.

13. Vorrichtung nach einem der Ansprüche 1 bis 12, **dadurch gekennzeichnet, dass** die Vorrichtung (20) in einem Rahmengestell (18) untergebracht ist und eine eigenständige Einheit bildet, welche mit Mitteln (11) zum Zuführen gefüllter Behälter (B, B1, B2) und Mitteln zum Wegführen geleerter Behälter kombinierbar ist.

14. Vorrichtung nach Anspruch 13, **dadurch gekennzeichnet, dass** innerhalb des Rahmengestells (18) eine von drei Seiten zugängliche horizontale Ebene (19) zur Aufnahme der zu leerenden Behälter (B, B1, B2) vorgesehen ist, dass das untere Klemmelement (22, 48) in der ersten Klemmposition (KP1) unterhalb der Ebene (19) positioniert und durch die Ebene (19) hindurch nach oben verschwenkbar ist, und dass das obere Klemmelement (21, 51, 52) in einem durch die Behälterhöhe vorgegebenen Abstand oberhalb der Ebene (19) angeordnet ist.

15. Vorrichtung nach Anspruch 14, **dadurch gekennzeichnet, dass** die Ebene zur Aufnahme der zu leerenden Behälter (B, B1, B2) durch eine Rollenbahn (19) gebildet wird, deren Transportrichtung parallel zur ersten horizontalen Achse (42) ausgerichtet ist.

16. Vorrichtung nach Anspruch 15, **dadurch gekennzeichnet, dass** die Rollenbahn (19) durch einen Elektromotor (37) angetrieben ist.

17. Vorrichtung nach einem der Ansprüche 14 bis 16, **dadurch gekennzeichnet, dass** die erste horizontale Achse (42) im oberen Bereich des Rahmengestells (18) in der Nähe und parallel zu einer Seitenkante des Rahmengestells (18) fest angeordnet ist, derart, dass ein zum Auskippen verschwenkter Behälter (B, B1, B2) aus dem Rahmengestell (18) nach oben herausgeschwenkt wird und der Inhalt über die Seitenkante nach unten fällt, und dass die Ebene bzw. die Rollenbahn (19) im Rahmengestell (18) in der Höhe veränderbar befestigt ist.

18. Vorrichtung nach Anspruch 17, **dadurch gekennzeichnet, dass** der ausserhalb des Rahmengestells (18) befindliche Schwenkbereich der Klemm/Schwenkvorrichtung (50) durch eine Schutzhaube (24) abgedeckt ist.

## Claims

1. Device (20) for unloading containers which are open at the top, in particular box-shaped containers (B, B1, B2) with a clamping/pivoting device (50), comprising a lower clamping element (22, 48) and an upper clamping element (21, 51, 52) for supporting the container (B, B1, B2) in a clamping relationship between both clamping elements (22, 48; 21, 51, 52), which can be pivoted together with the supported container (B, B1, B2) around a first horizontal axis (42) provided laterally beside the container (B, B1, B2), wherein both clamping elements (22, 48; 21, 51, 52) can be displaced one relative to the other between a first clamping position (KP1), in which a container (B, B1, B2) can be introduced between both clamping elements (22, 48; 21, 51, 52) or can be retrieved from between both clamping elements (22, 48; 21, 51, 52), respectively, and a second clamping position (KP2), in which the container (B, B1, B2) being introduced is held between both clamping elements (22, 48; 21, 51, 52) in a clamping relationship, and wherein the upper clamping element (21, 51, 52) can be pivoted between the first clamping position (KP1) and the second clamping position (KP2) in a relative relationship to the lower clamping element (22, 48) around a second horizontal axis, which is parallel to the first horizontal axis (42) and on the same side of the container (B, B1, B2) as is the first horizontal axis (42) **characterized in that** the upper clamping element (21, 51, 52) is pretensed around the second horizontal axis in direction of the second clamping position (KP2) to generate a clamping force.

2. Device according to claim 1, **characterized in that** torsion spring elements (43) are provided to generate the pretension in the second horizontal axis.

3. Device according to one of claims 1 or 2, **characterized in that** the first and the second horizontal axes fall together within one single axis (42).

4. Device according to claim 3, **characterized in that** the clamping/pivoting device (50) can be pivoted around the first horizontal pivoting axis (42) between a first pivoting position (SP1), within which a container (B, B1, B2) can be introduced between both clamping elements (22, 48; 21, 51, 52) or can be retrieved from between both clamping elements (22, 48; 21, 51, 52), respectively, and a second pivoting position (SP2), within which a content of the container (B, B1, B2) falls out from the container (B, B1, B2), **in that** the clamping elements (22, 48; 21, 51, 52) in the first pivoting position (SP1) of the clamping/pivoting device (50) are positioned in a first clamping position (KP1), **in that** the clamping elements (22, 48; 21, 51, 52) in the second pivoting position (SP2) of the clamping/pivoting device (50) are positioned within the second clamping position (KP2), and **in that** means (41) are provided adapted to bring the clamping elements (22, 48; 21, 51, 52) from the second clamping position (KP2) into the first clamping position (KP1) when the clamping/pivoting device (50) is pivoted from the second pivoting position (SP2) into the first pivoting position (SP1) and vice versa.

5. Device according to claim 4, **characterized in that** the means comprise an abutment (41), wherein the upper clamping element (21, 51, 52), upon pivoting of the clamping/pivoting device (50) from the second pivoting position (SP2) into the first pivoting position (SP1) before arriving at the second pivoting position (SP2), strikes against with its free end.

6. Device according to one of claims 1 to 5, **characterized in that** the lower clamping element (22, 48) comprises a bottom support (48), which is fixed at its free leg of an L-shaped pivoting arm (22), engaging below the container (B, B1, B2) and which can be pivoted around the first horizontal axis (42) in a way that the bottom support (48) contacts, in its second clamping position (KP2), the bottom of the container (B, B1, B2) which is maintained in a clamping relationship.

7. Device according to claim 6, **characterized in that** the bottom support (48) can be adjusted to adjust differently high containers (B, B1, B2) for their distance to the pivoting arm (22) with the help of a height adjustment (55).

8. Device according to claims 6 or 7, **characterized in that** means (49, 56) are provided at the lower clamping element (22, 48) to centre the containers (B, B1, B2) being introduced into the clamping/pivoting device (50) which means comprise a centering element (49) having the form of a wedge, attached at the bottom support (48) and an abutment (56) attached at the pivoting arm (22).

9. Device according to one of claims 1 to 8, **characterized in that** the upper clamping element is a cover (21), contacting the upper edge of the container (B, B1, B2) introduced into the clamping/pivoting device (50) within the second clamping position (KP2) and comprising an opening (53) to empty the content of the container.

10. Device according to claim 9, **characterized in that** the cover (21) comprises a frame (51) and a plate (52) attached to said frame (51), in which a recess (53) adapted to the dimensions of the container (B, B1, B2) is provided as an opening to empty the content of the container.

11. Device according to claims 9 or 10, **characterized in that** centering elements (54) laterally having the form a wedge are provided on the underside of the cover (21) for centering the containers (B, B1, B2) being introduced into the clamping/pivoting device.

12. Device according to one of claims 1 to 11, **characterized in that** a lever mechanism (45, 46, 47) is provided for pivoting the clamping/pivoting device (50) between both pivoting positions (SP1, SP2), being positioned below the lower clamping element (22, 48), driven by an electric motor (39) and engaging the lower clamping element (22, 48).

13. Device according to one of claims 1 to 12, **characterized in that** the device (20) is provided within a frame support (18) and forms an independent unit, which can be combined with means (11) for adding filled containers (B, B1, B2) and means for taking away emptied containers.

14. Device according to claim 13, **characterized in that** a plane (19) being accessible from three sides is provided within the frame support (18) to accept containers (B, B1, B2) to be emptied, **in that** the lower clamping element (22, 48) can be positioned below said plane (19) in the first clamping position (KP1) and **in that** it can be pivoted traversing plane (19) upwards, and **in that** the upper clamping element (21, 51, 52) is positioned in a distance defined by the height of the container beyond the plane (19).

15. Device according to claim 14, **characterized in that** the plane is formed by a roller conveyor (19) to accept containers (B, B1, B2) to be emptied, wherein the transporting direction is oriented parallel to the first horizontal axis (42).

16. Device according to claim 15, **characterized in that** the roller conveyor (19) is driven by an electric motor (37).

17. Device according to any one of claims 14 to 16, **characterized in that** the first horizontal axis (42) is fixedly arranged in the upper portion of the frame support (18) near and parallel to a side edge of the frame support (18) in a way, that a container (B, B1, B2) being pivoted to be emptied is pivoted outside the frame support (18) upwards and the content falls over the side edge towards the bottom, and **in that** the plane or roller conveyor (19), respectively, is fixed within the support frame (18) at a variable height.

18. Device according to claim 17, **characterized in that** the pivoting zone of the clamping/pivoting device (50) being outside of the frame support (18) is covered with a protecting cover (24).

## Revendications

1. Dispositif (20) pour décharger des conteneurs (B, B1, B2) ouverts en haut, notamment en forme de boîte, lequel dispositif comporte un dispositif de pivotement et de serrage (50) qui possède un élément de serrage inférieur (22, 48) et un élément de serrage supérieur (21, 51, 52) pour maintenir par serrage le conteneur (B, B1, B2) entre les deux éléments de serrage (22, 48 ; 21, 51, 52) qui sont aptes à pivoter conjointement avec le conteneur maintenu (B, B1, B2) autour d'un premier axe horizontal (42) disposé latéralement à côté du conteneur (B, B1, B2), les deux éléments de serrage (22, 48 ; 21, 51, 52) pouvant être déplacés l'un par rapport à l'autre entre une première position de serrage (KP1), dans laquelle un conteneur (B, B1, B2) peut être introduit entre les deux éléments de serrage (22, 48 ; 21, 51, 52) respectivement retiré d'entre les deux éléments de serrage (22, 48 ; 21, 51, 52), et une seconde position de serrage (KP2) dans laquelle le conteneur introduit (B, B1, B2) est maintenu serré entre les deux éléments de serrage (22, 48 ; 21, 51, 52), et l'élément de serrage supérieur (21, 51, 52) étant apte à pivoter par rapport à l'élément de serrage inférieur (22, 48) entre la première position de serrage (KP1) et la seconde position de serrage (KP2) autour d'un second axe horizontal qui est disposé parallèlement au premier axe horizontal (42) et du même côté du conteneur (B, B1, B2) que le premier axe horizontal (42), **caractérisé en ce que**, pour générer une force de serrage, l'élément de serrage supérieur (21, 51, 52) est précontraint élastiquement autour du second axe horizontal en direction de la seconde position de serrage (KP2).

2. Dispositif selon la revendication 1, **caractérisé en ce que**, pour générer la précontrainte, des éléments formant ressort de torsion (43) sont prévus dans le second axe horizontal.

3. Dispositif selon l'une des revendications 1 ou 2, **caractérisé en ce que** les premier et second axes horizontaux coïncidant en un axe (42).

4. Dispositif selon la revendication 3, **caractérisé en ce que** le dispositif de pivotement et de serrage (50) est apte à effectuer un mouvement de pivotement alternatif autour du premier axe de pivotement horizontal (42) entre une première position de pivotement (SP1), dans laquelle un conteneur (B, B1, B2) peut être introduit entre les deux éléments de serrage (22, 48 ; 21, 51, 52) respectivement retiré d'entre les deux éléments de serrage (22, 48 ; 21, 51, 52), et une seconde position de pivotement (SP2) dans laquelle le contenu du conteneur (B, B1, B2) tombe du conteneur (B, B1, B2), **en ce que** les éléments de serrage (22, 48 ; 21, 51, 52) se trouvent dans la première position de serrage (KP1) lorsque le dispositif de pivotement et de serrage (50) est dans la première position de pivotement (SP1), **en ce que** les éléments de serrage (22, 48 ; 21, 51, 52) se trouvent dans la seconde position de serrage (KP2) lorsque le dispositif de pivotement et de serrage (50) est dans la seconde position de pivotement (SP2), et **en ce qu'**il est prévu des moyens (41) qui permettent d'amener les éléments de serrage (22, 48 ; 21, 51, 52) de la seconde position de serrage (KP2) dans la première position de serrage (KP1) lorsque le dispositif de pivotement et de serrage (50) est pivoté de la seconde position de pivotement (SP2) dans la première position de pivotement (SP1), et inversement.

5. Dispositif selon la revendication 4, **caractérisé en ce que** les moyens possèdent une butée (41) contre laquelle l'élément de serrage supérieur (21, 51, 52) bute avec son extrémité libre avant d'atteindre la seconde position de pivotement (SP2) lorsque le dispositif de pivotement et de serrage (50) est pivoté de la seconde position de pivotement (SP2) dans la première position de pivotement (SP1).

6. Dispositif selon l'une des revendications 1 à 5, **caractérisé en ce que** l'élément de serrage inférieur (22, 48) comporte un support de fond (48) qui est fixé à la branche libre d'un bras de pivotement (22) en forme de L et s'engageant sous le conteneur (B, B1, B2) et qui est apte à pivoter avec ledit bras de pivotement autour du premier axe horizontal (42) de telle sorte que le support de fond (48) porte, dans la seconde position de serrage (KP2), sur le fond du conteneur (B, B1, B2) maintenu serré.

7. Dispositif selon la revendication 6, **caractérisé en ce que** le support de fond (48) est déplaçable par un réglage en hauteur (55) afin de régler la distance de conteneurs (B, B1, B2) de différentes hauteurs par rapport au bras de pivotement (22).

8. Dispositif selon la revendication 6 ou 7, **caractérisé en ce qu'**il est prévu au niveau de l'élément de serrage inférieur (22, 48) des moyens (49, 56) pour centrer les conteneurs (B, B1, B2) introduits dans le dispositif de pivotement et de serrage (50), lesquels moyens comportent un élément de centrage cunéiforme (49) monté sur le support de fond (48) et une butée (56) montée sur le bras de pivotement (22).

9. Dispositif selon l'une des revendications 1 à 8, **caractérisé en ce que** l'élément de serrage supérieur est un couvercle (21) qui porte, dans la seconde position de serrage (KP2), sur le bord supérieur du conteneur (B, B1, B2) introduit dans le dispositif de pivotement et de serrage (50) et possède une ouverture (53) pour verser le contenu du conteneur.

10. Dispositif selon la revendication 9, **caractérisé en ce que** le couvercle (21) comporte un cadre (51) et une plaque (52) qui est fixée au cadre (51) et dans laquelle il est ménagé, comme ouverture de versement du contenu du conteneur, une découpe (53) adaptée aux dimensions du conteneur (B, B1, B2).

11. Dispositif selon la revendication 9 ou 10, **caractérisé en ce qu'**il est prévu latéralement, du côté inférieur du couvercle (21), des éléments de centrage cunéiformes (54) pour centrer les conteneurs (B, B1, B2) introduits dans le dispositif de pivotement et de serrage (50).

12. Dispositif selon l'une des revendications 1 à 11, **caractérisé en ce que**, pour faire pivoter le dispositif de pivotement et de serrage (50) entre les deux positions de pivotement (SP1, SP2), il est prévu un mécanisme à levier (45, 46, 47) qui est disposé au-dessous de l'élément de serrage inférieur (22, 48), qui est entraîné par un moteur électrique (39) et qui s'engage sur l'élément de serrage inférieur (22, 48).

13. Dispositif selon l'une des revendications 1 à 12, **caractérisé en ce que** le dispositif (20) est monté dans un bâti (18) et forme une unité autonome qui peut être combinée à des moyens (11) pour amener des conteneurs remplis (B, B1, B2) et des moyens pour emporter des conteneurs vidés.

14. Dispositif selon la revendication 13, **caractérisé en ce qu'**à l'intérieur du bâti (18) il est prévu un plan horizontal (19) accessible depuis trois côtés et destiné à recevoir les conteneurs à vider (B, B1, B2), **en ce que** l'élément de serrage inférieur (22, 48) est positionné dans la première position de serrage (KP1) au-dessous du plan (19) et peut être pivoté vers le haut en traversant le plan (19), et **en ce que** l'élément de serrage supérieur (21, 51, 52) est disposé au-dessus du plan (19) à une distance prédéterminée par la hauteur du conteneur.

15. Dispositif selon la revendication 14, **caractérisé en ce que** le plan destiné à recevoir les conteneurs à vider (B, B1, B2) est formé par un transporteur à rouleaux (19) dont la direction de transport est orientée parallèlement au premier axe horizontal (42).

16. Dispositif selon la revendication 15, **caractérisé en ce que** le transporteur à rouleaux (19) est entraîné par un moteur électrique (37).

17. Dispositif selon l'une des revendications 14 à 16, **caractérisé en ce que** le premier axe horizontal (42) est disposé de façon fixe dans la région supérieure du bâti (18) à proximité d'un bord latéral du bâti (18) et parallèlement à celui-ci de sorte qu'un conteneur (B, B1, B2) qui a été pivoté pour le versement est écarté du bâti (18) par pivotement vers le haut et le contenu tombe vers le bas par-dessus le bord latéral et de sorte que le plan respectivement le transporteur à rouleaux (19) est fixé dans le bâti (18) de façon à pouvoir modifier sa hauteur.

18. Dispositif selon la revendication 17, **caractérisé en ce que** la région de pivotement du dispositif de pivotement et de serrage (50), laquelle se trouve à l'extérieur du bâti (18), est recouverte par un capot de protection (24).
